# FASCICULE DE BREVET EUROPEEN

(11) **EP 1 108 663 B1**
(45) Date de publication et mention de la délivrance du brevet: **12.02.2003**
(21) Numéro de dépôt: 00403315.5
(22) Date de dépôt: 28.11.2000
(51) Int. Cl.: B65G 57/30, B65G 1/04, H01L 21/00, H05K 13/00

(54) **Magasin de stockage de cartes à puce**
Lagermagazin für Chipkarten
Storage magazine for chip cartes

(30) Priorité: 16.12.1999 FR 9915881
(43) Date de publication de la demande: 20.06.2001
(73) Titulaire: SAGEM S.A., 75015 Paris (FR)
(72) Inventeur: Seigneur, Patrick M., 86280 Saint Benoit (FR); Lecordier, Denis M., 78100 St. Germain en L. (FR)
(74) Mandataire: Schmit, Christian Norbert Marie

(56) Documents cités:
- EP-A- 0 849 773
- US-A- 5 611 858

## Description

La présente invention a pour objet un magasin de stockage de cartes à puce. Elle s'applique au domaine de la fabrication des cartes à puce et plus particulièrement au stockage des cartes à puce lors d'une phase de polymérisation. Une phase de polymérisation fait suite à une phase de collage d'une puce ou microcircuit sur un support plastique, le tout formant une carte à puce.

Actuellement, on sait stocker des cartes à puce par empilage afin de réduire un encombrement principalement. On connaît aussi le problème lié à la polymérisation de la colle utilisée. En effet, une colle utilisée est souvent une colle de type cyanoacrylate et cette colle présente l'inconvénient de dégager un gaz agressif pendant une phase de polymérisation. En général, une fois la phase de collage terminée, les cartes à puce sont placées les unes sur les autres avant même que la phase de polymérisation soit terminée. En conséquence, cette dernière est réalisée alors que les cartes à puce sont empilées et en contact. Le dégagement gazeux dû à la colle sur une carte vient attaquer chimiquement, par corrosion, la partie de la carte placée dessus. Ainsi, nombreuses sont les cartes à puce qui ont subi une agression chimique, ce qui a pour effet de détériorer le support de la carte à puce voire la puce elle-même.

Par exemple, le document US-A-5,611,858 montre un appareil de transport de substrats avec une courroie crantée horizontale.

Plusieurs réalisations ont été mises en oeuvre afin de palier ce problème. On connaît par exemple une première réalisation dans laquelle on introduit des phases d'attente pendant lesquelles la polymérisation peut se poursuivre sans détériorer une autre carte à puce. Pour cela, on peut, par exemple, faire cheminer une carte à puce sur une plus grande distance. On peut aussi dans une deuxième réalisation placer entre deux cartes à puce un film protecteur. On peut envisager aussi, dans une troisième réalisation, d'utiliser moins de colle afin de réduire le dégagement gazeux.

Ces réalisations présentent des problèmes. En effet, le fait d'augmenter l'acheminement d'une carte à puce augmente par là-même un encombrement des dispositifs de maintenance d'une carte à puce. De plus, en utilisant des films de protection, on augmente un coût de fabrication d'une carte à puce. En effet, les chaînes de fabrication de cartes à puce peuvent atteindre un débit supérieur à cent mille cartes par jour et donc tout autant de films de protection. En outre, le fait de diminuer la quantité de colle utilisée pour le collage d'une puce conduit à fragiliser la fixation entre la puce et le support de la carte à puce ainsi obtenue.

La présente invention a pour objet de remédier à ces problèmes en proposant un dispositif de stockage à encombrement réduit tout en permettant à la phase de polymérisation d'être réalisée sans vicier les autres cartes à puce. En effet, dans l'invention un encombrement est réduit par la mise en oeuvre d'un empilage tout en ayant une étape de dégazage permettant à la phase de polymérisation de se dérouler correctement.

L'invention concerne donc un magasin de stockage de cartes à puce selon la revendication 1.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une première vue d'un magasin de stockage de cartes à puce selon l'invention.
- Figure 2 : une deuxième vue du magasin de stockage de cartes à puce selon l'invention.

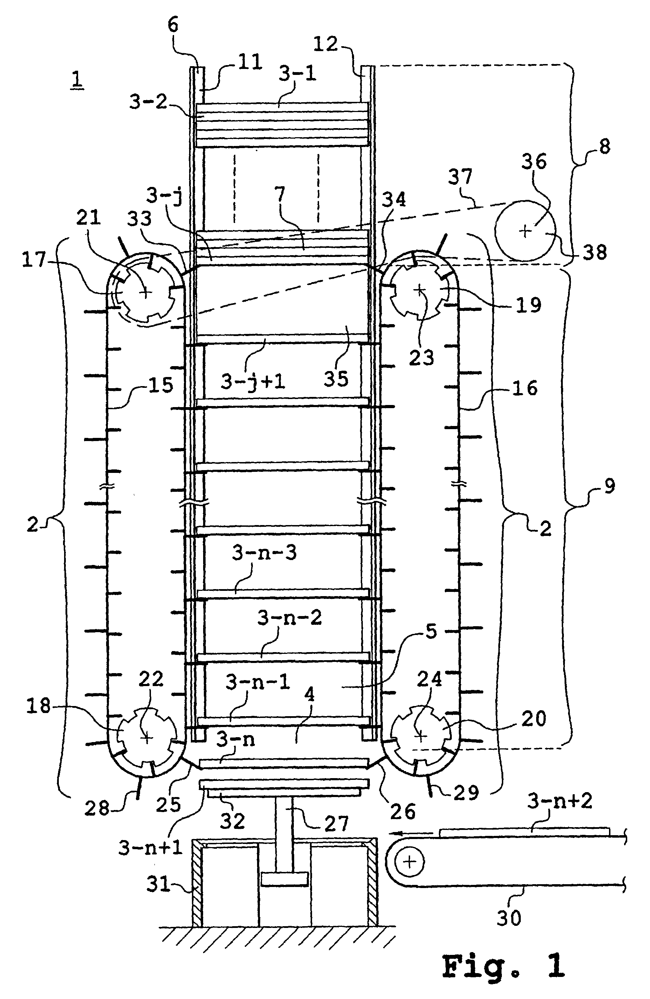

La figure 1 montre, selon une première vue, un magasin 1 de stockage de cartes à puce selon l'invention. Ce magasin 1 comporte un moyen d'empilage de cartes à puce. Une fonction de ce moyen 2 est d'empiler, par le bas, des cartes à puce 3-1, 3-2 à 3-n. Dans un exemple n vaut 250. La carte 3-1, la plus ancienne dans la pile, correspond au sommet de la pile et la carte 3-n, la plus récente, correspond au bas de la pile, une nouvelle carte à puce étant empilée par le bas.

Selon une caractéristique essentielle de l'invention, le moyen 2 réalise la fonction d'empiler tout en laissant un volume de dégazage entre deux cartes à puce consécutives. Un volume de dégazage est un volume compris entre deux cartes à puce consécutives. Par exemple, entre la carte 3-n et 3-n-1, on a un volume 4 de dégazage. Ainsi, une phase de polymérisation de la carte 3-n peut se faire sans que l'intégrité physique de la carte 3-n-1 ne soit atteinte. De même, entre la carte 3-n-1 et la carte 3-n-2, on a un volume 5 de dégazage et ainsi de suite.

Dans un exemple préféré de l'invention, le magasin 1 comporte une colonne 6 servant de réceptacle à une pile 7 de cartes à puces. Dans un exemple, la pile 7 comporte les cartes 3-1 à 3-n. La colonne 6 comporte, dans cet exemple préféré, une zone 8 de stockage en partie haute de la pile 7 et une zone 9 de dégazage en partie basse de la pile 7. Une carte à puce passe ainsi, lors de l'empilage, de la zone 9 à la zone 8. Une différence essentielle entre la zone 8 et la zone 9 est que le volume de dégazage, présent entre deux cartes à puce consécutives dans la zone 9, est supprimé dans la zone 8. En conséquence, la zone 9 est réalisée de telle manière que lorsqu'une carte à puce sort de cette zone 9 alors on considère que le dégazage est complet et que donc le volume de dégazage qui a permis l'évacuation des gaz associés à cette carte peut donc être supprimé lors de l'entrée de cette carte dans la zone 8.

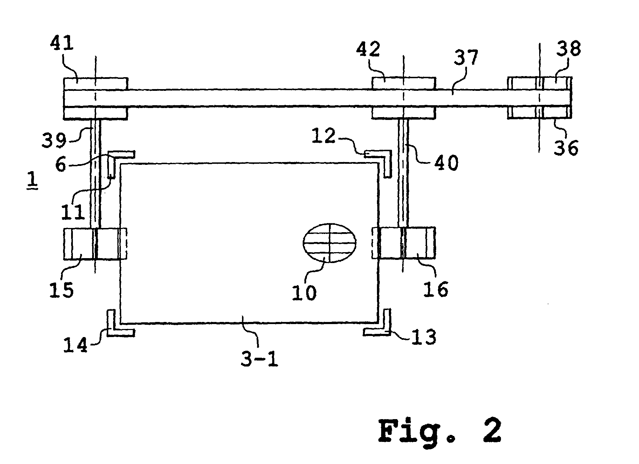

La figure 2 montre une deuxième vue du magasin 1 selon l'invention. Cette vue est une vue de dessus du magasin 1 et permet de distinguer la carte 3-1 de face c'est-à-dire selon une face sur laquelle est collé un microcircuit 10. En outre, dans cet exemple préféré, la colonne 6 comporte un rail 11 de guidage d'une carte à puce telle que la carte 3-1. Dans un exemple préféré l'oreille de guidage est en contact avec une carte à puce pour guider cette dernière par l'intermédiaire d'un coin de cette carte à puce. La colonne 6 comporte en outre un deuxième rail 12 de guidage, un troisième rail 13 de guidage et un quatrième rail 14 de guidage, chacun étant en contact avec un coin d'une carte à puce. Une forme d'un rail de guidage est constituée par deux plans de contact avec une carte à puce, ces deux plans étant perpendiculaire l'un par rapport à l'autre. On pourrait cependant envisager d'utiliser des tiges à la place des plans. Ainsi une carte à puce, lors d'un empilage, est entraînée vers le haut de la colonne tout en étant guidée par les rails 11 à 14 et ce par l'intermédiaire du moyen 2.

Dans un exemple de l'invention, le moyen 2 de la figure 1 est un jeu de deux courroies 15 et 16. La face externe de la courroie 15 et la face externe de la courroie 16 sont crantées. De préférence, les courroies 15 et 16 sont synchronisées, c'est à dire qu'un cran de la courroie 15 est en regard d'un cran de la courroie 16. Chaque courroie est montée verticalement sur poulies de part et d'autre de bords opposés d'une carte à puce. Dans un exemple, les courroies 15 et 16 sont montées de part et d'autre des bords d'une carte à puce associées à la largeur de celle-ci. En effet, une carte à puce peut être définie par une largeur, une longueur plus grande que la largeur et une épaisseur généralement inférieure à 1 millimètre. Les courroies 15 et 16 sont ainsi montées verticalement sur des poulies 17 et 18 pour la courroie 15 et 19 et 20 pour la courroie 16. Chaque courroie 17 à 20 est définie notamment par un axe 21 à 24 de rotation respectivement. Ainsi, la poulie 17 est à l'aplomb de la poulie 18 et la poulie 19 est à l'aplomb de la poulie 20. De plus dans l'exemple préféré une distance entre les axes 21 et 22 ou entre les axes 23 et 24 est de l'ordre d'une hauteur occupée par la zone 9. Ainsi, la zone 8 est une zone se trouvant au-dessus des axes 21 et 23 des poulies 17 et 19. En outre, une hauteur associée aux courroies 15 et 16 est inférieure à une hauteur de la colonne 6.

En outre, un espacement entre les faces externes des courroies 15 et 16 est supérieur à la longueur d'une carte à puce. Plus précisément, il s'agit de l'espacement entre les deux parties en regard des courroies 15 et 16. Cependant, dans le cas où les courroies 15 et 16 seraient en contact avec les bords selon la longueur alors l'espacement serait supérieur à la largeur d'une carte à puce. De plus, un espacement entre deux crans en regard est inférieur à la largeur et ou à la longueur d'une carte à puce, un choix de la longueur et ou de la largeur est en fonction des mêmes considérations que précédemment. On considère dans la suite que l'espacement est déterminé par rapport à la longueur d'une carte à puce. Ainsi, deux crans en regard servent d'une part de support à une première carte à puce dans la zone 9 notamment.

En conséquence, les cartes à puce se trouvant dans la zone 9 sont portées vers le haut de la zone 9, c'est-à-dire dans la zone 8 en prenant appui sur deux crans en regard. Pour cela, les poulies 17 et 18 tournent dans un sens anti-horaire et les poulies 19 et 20 tournent dans un sens horaire afin d'obtenir un mouvement vers le haut des cartes à puce. On obtient bien par conséquent un empilage par le bas. D'autre part, ces deux même crans en regard peuvent servir aussi de butée à une deuxième carte à puce en entrée de la zone 9. Dans un exemple, la première carte à puce est la carte 3-n et la deuxième carte à puce est une carte 3-n+1 qui est présentée en entrée de la zone 9. Dans cet exemple, la carte 3-n repose sur un cran 25 de la courroie 15 et un cran 26 en regard de la courroie 16. Ainsi, les cartes 3-1 à 3-n sont présentes dans la zone 8 ou dans la zone, la carte 3-1 étant la première carte entrée et la carte 3-n étant la dernière en date. Dans cette configuration, la carte 3-n+1 arrive en butée sur les crans 25 et 26 et exerce une poussée sur ces derniers qui a pour effet d'enclencher un mouvement de rotation des poulies 17 à 20. Suite à ce mouvement de rotation des poulies 17 à 20, les cartes à puce de la zone 9 sont poussées vers le haut d'un palier supplémentaire dont une distance dépend de la distance sur laquelle est poussée la carte 3-n+1. Cependant, on peut n'utiliser qu'un cran sur deux, par exemple, comme support. Dans ce cas, ce cran ne sera pas utilisé comme butée.

Dans un exemple préféré de l'invention les courroies 15 et 16 sont mises en mouvement par l'intermédiaire d'un piston 27. Ainsi, c'est ce piston 27 qui exerce la poussée sur la carte 3-n+1 afin d'amener cette dernière au contact des crans 25 et 26 et de faire avancer les cartes à puce dans la zone 9 d'un pallier. Le piston 27 exerce ainsi une poussée vers le haut ce qui permet à la carte 3-n+1 d'être entraînée par le jeu de courroies 15 et 16. Une distance parcourue par le piston est déterminée principalement par la distance nécessaire pour emmener la carte 3-n+1 au contact des crans 25 et 26 ajoutée à la distance nécessaire pour que lors du mouvement 15 et 16 les deux crans 28 et 29 qui suivent immédiatement les crans 25 et 26 respectivement se rapprochent d'une distance inférieure à la longueur de la carte 3-n+1. A cet instant, le piston 27 peut redescendre. La carte 3-n+1 suit le piston 27 lors de sa descente, suite à l'effet de la pesanteur. Cependant, vu que les crans 28 et 29 se sont suffisamment rapprochés pour qu'une distance les séparant soit inférieure à la longueur d'une carte à puce alors la carte 3-n+1 est stoppée dans sa descente par ses deux crans 28 et 29 qui dorénavant vont servir de butée à cette carte 3-n+1 pendant sa traversée de la zone 9. Cette opération est répétée à chaque nouvelle carte à puce arrivant au-dessus du piston 27. Une nouvelle carte 3-n+2 est emmenée au-dessus du piston 27 par l'intermédiaire d'un tapis roulant 30 par exemple.

Dans un exemple préféré, le piston 27 comporte une zone 31 de réception d'une carte à puce. Cette zone 31 assure à une carte à puce, par exemple la carte 3-n+1, un positionnement correct vis à vis de la colonne 6, c'est-à-dire un positionnement dans un même axe. Ainsi, lorsqu'une carte à puce est placée dans la zone 31 alors le piston 27 est mis en mouvement, par des organes de commande non représentés, pour placer cette carte à puce dans la zone 9.

Dans un exemple préféré, le piston 27 est muni d'un support 32. Ce support 32 permet de porter une carte à puce telle que la carte 3-n+1 pour la placer dans la zone 9. Un encombrement de ce support 32, par rapport à deux crans en regard, est inférieur à l'espacement entre ces deux crans en regard. Pour schématiser ceci, on peut dire que lorsque le piston 27 exerce sa poussée vers le haut, le plateau 32 ne touche pas les crans des courroies 15 et 16. Le plateau 32 peut être réalisé suivant tout modèle permettant de maintenir une carte à puce pendant la phase de poussée du piston 27. Ainsi, le plateau 32 peut être constitué d'une plaque voire même de tiges, chacune exerçant une pression à un endroit donné de la carte 3-n+1. Mais, on pourrait envisager toute autre réalisation pour le plateau 32, la condition principale étant que le plateau 32 exerce sur la carte 3-n+1 une pression la plus homogène possible afin d'avoir une poussée sur les crans 25 et 26 homogène.

Ainsi, dans l'invention, deux crans consécutifs d'une même courroie 15 ou 16 sont séparés d'une distance de dégazage et permettent ainsi d'obtenir un volume de dégazage tel que le volume 4 ou le volume 5. Une durée pendant laquelle un volume de dégazage, par exemple le volume 4, doit exister est au moins égale à une durée après laquelle la phase de polymérisation n'induit plus un dégagement gazeux corrosif. Une durée de quatre minutes dans la zone 9 est suffisante pour la phase de polymérisation. Ainsi, une hauteur de la zone 9 dépend, lorsque la durée est fixée, du débit avec lequel de nouvelles cartes à puce telles que les cartes 3-n+1 et 3-n+2 sont présentées en entrée de la zone 9. De plus, dans un exemple préféré, la distance de dégazage est de l'ordre de 5 millimètres. Cette valeur est tout à fait empirique. Cependant, on pourrait justifier cette valeur voire l'optimiser en étudiant une propagation des gaz associés au dégagement gazeux dans un volume de dégazage et de déterminer ainsi jusqu'à quelle hauteur ce dégagement est encore corrosif ou, tout du moins, dont un effet corrosif est jugé acceptable.

On peut encore optimiser la distance de dégazage en utilisant dans une variante de l'invention un moyen de ventilation, non représenté, afin de créer un courant d'air dans un volume de dégazage. Ainsi, l'air contenu dans le volume de dégazage est purifié et donc une distance de dégazage peut être réduite. En outre, ces deux utilisations n'étant pas antinomiques elles peuvent très bien être associées afin d'optimiser encore plus la distance de dégazage. Un effet immédiat de l'optimisation de la distance de dégazage correspond à soit une diminution d'un encombrement de la pile 7 si un nombre de cartes à puce devant être stockées est le même que précédemment soit en une augmentation de la capacité de la pile 7.

Une fois qu'une carte à puce par exemple une carte 3-j arrive en sortie de la zone 9 alors, au palier suivant, les crans 33 de la courroie 15 et 34 de la courroie 16 supportant cette carte 3-j vont commencer à s'écarter l'un de l'autre. En effet, les crans 33 et 34 commencent à décrire un demi-cercle dû à l'enroulement des courroies 15 et 16 autour des poulies 17 et 19 respectivement. Lorsque l'écart entre le cran 33 et le cran 34 est supérieur à la longueur de la carte 3-j alors cette dernière tombe, à cause de la pesanteur, le long de la colonne 6. Cependant la carte 3-j+1 suivante, c'est-à-dire la prochaine à se présenter en sortie de la zone 9, stoppe immédiatement la chute de la carte 3-j et sert de support à cette dernière elle-même étant supportée par deux crans en regard. Ainsi une zone 35 de dégazage entre la carte 3-j et la carte 3-j+1 est supprimée. En conséquence, les cartes 3-1 à 3-j déjà présentes dans la zone 8 sont empilées comme dans la zone 9 mais sans zone de dégazage. Ainsi, la pile 7 est en fait constituée de deux piles placées l'une sur l'autre, une première pile correspondant aux cartes 3-j+1 à 3-n empilées avec une zone de dégazage entre chaque carte et une deuxième pile constituée par les cartes 3-1 à 3-j empilées sans présence d'une zone de dégazage. La première pile est donc dans la zone 9 et la deuxième pile est dans la zone 8.

La colonne 6, les axes 21 à 24, ainsi qu'éventuellement le piston 27 sont fixés à un bâti. Ce bâti n'est ni représenté ni décrit car cela alourdirait inutilement la description de l'invention et donc obscurcirait les caractéristiques essentielles de l'invention.

Une condition de bon fonctionnement du magasin 1 de l'invention est que la dimension entre le cran 25 et le cran 26 soit inférieure à la longueur de la carte 3-n+1 lorsque celle-ci vient au contact de ces deux crans 25 et 26. En outre, il faut aussi que la dimension entre le cran 28 et le cran 29 soit supérieure à la longueur de la carte 3-n+1 lorsque celle-ci vient au contact des crans 25 et 26. Ceci est défini par le point de contact entre une carte à puce et un cran. Il faut que ce point de contact soit le plus proche possible de l'extrémité du cran considéré. L'extrémité d'un cran correspond à la partie la plus éloignée du cran par rapport à la face externe de la courroie comportant ce cran.

Dans une variante préférée de l'invention, le magasin 1 comporte un moyen 36 de synchronisation du jeu de courroie 15 et 16. Dans un exemple préféré, ce moyen 36 comporte une courroie 37 montée sur une poulie 38. La poulie 38 est fixée, dans le même sens que les poulies 17 à 20, sur le bâti. Dans cet exemple préféré, les poulies 17 et 19 notamment sont montées sur des arbres 39 et 40 respectivement de transmission, ces arbres étant fixes par rapport aux poulies auxquelles ils sont rattachés. Ces arbres 39 et 40 comportent en outre deux poulies 41 et 42 respectivement. Les poulies 41 et 42 sont montées de manière fixe sur les arbres 39 et 40 respectivement. Une fonction de ce moyen 36 est de compenser une éventuelle poussée non homogène par l'intermédiaire du piston 27 car en effet, si une poussée exercée par le piston 27 sur la carte 3-n+1 n'est plus homogène de façon à assurer un contact simultané entre la carte 3-n+1 et les crans 25 et 26 alors cette carte 3-n+1 touchera l'un des deux crans 25 ou 26 en premier.

Dans un exemple, si la carte 3-n+1 vient au contact du cran 26 en premier alors la courroie 16 sera mise en mouvement avant la courroie 15. Le moyen 36 permet de compenser ce phénomène en rendant dépendant le mouvement des courroies 15 et 16 l'une par rapport à l'autre. Pour cela, la courroie 37 est mise en mouvement par la poulie 41 par l'intermédiaire de sa face interne et elle est mise en mouvement par la poulie 42 par l'intermédiaire de sa face externe, la poulie 38 étant une poulie de roue libre. La poulie 38 a pour seule fonction de permettre à la courroie 37 de fonctionner. Ainsi, si la courroie 16 se met en mouvement avant la courroie 15 alors ce mouvement est transmis à la poulie 42 par l'intermédiaire de la poulie 19 et de l'arbre 40 ce qui provoque la mise en mouvement de la courroie 37. Cette mise en mouvement de la courroie 37 permet de mettre en mouvement la poulie 41 et donc la poulie 17 par l'intermédiaire de l'arbre 39. Ceci a pour conséquence de mettre en mouvement la courroie 15 et donc de garder un synchronisme entre la courroie 15 et la courroie 16. Un synchronisme entre la courroie 15 et la courroie 16 signifie que l'on a toujours les crans de la courroie 15 en regard des crans de la poulie 16. Lorsque les deux courroies 15 et 16 sont mises en mouvement de manière synchrone, par une poussée homogène, alors la courroie 37 fonctionne sans effort c'est-à-dire que ni la poulie 41 ni la poulie 42 n'exerce une pression particulière sur la courroie 37 afin de compenser une mise en mouvement prématurée. Pour améliorer un fonctionnement du moyen 36, on place l'axe de rotation de la poulie 38 au-dessus des axes 21 et 23 des poulies 17 et 19 respectivement.

En outre, la poulie 38 est une roue libre anti-retour, c'est à dire qu'elle ne peut tourner que dans un sens. Ce sens est celui correspondant à la montée d'une carte à puce dans la colonne 6. Cette fonction anti-retour permet d'éviter à la pile 7 de redescendre sous l'effet de son poids.

Afin d'éviter en outre tout problème d'insertion lors de la mise en place de la première carte dans le magasin 1, c'est à dire la carte 3-1, le magasin 1 comporte un moyen d'indexage non représenté. Ce moyen d'indexage permet de repérer une position de départ des courroies 15 et 16 et est donc utilisé seulement lors d'une phase d'initialisation. Une phase d'initialisation correspond à la mise en place de la carte 3-1 en entrée de la zone 9. Ce moyen d'indexation pourra être une tige montée sur un ressort qui vient s'indexer dans un trou ou arrive en butée sur une cale, le trou ou la butée étant placés par exemple sur l'arbre 39 ou 40, voire sur la face externe, dans la mesure du possible à cause de la présence des cartes à puce, de la courroie 15 ou de la courroie 16. L'important est que cette indexation permette de placer le magasin 1 dans une position de départ permettant au système de fonctionner. Lors d'un fonctionnement du moyen d'empilage, une action du moyen d'indexation est désactivée en bloquant par exemple ce moyen dans une position non indexée.

## Revendications

1. Magasin (1) de stockage de cartes (3-1 à 3-n) à puce **caractérisé en ce qu'**il comporte un moyen (2) d'empilage vertical de cartes à puce, ce moyen comportant deux courroies (15, 16) crantées verticales, le pas du crantage définissant la hauteur d'un volume (4) de dégazage entre deux cartes (3n, 3n-1) engagées consécutivement, par le bas, entre les courroies pour produire une pile (7) de cartes au sommet des courroies.

2. Magasin selon la revendication 1 **caractérisé en ce qu'**il comporte une colonne (6) servant de réceptacle à la pile de carte à puce, le réceptacle comportant une zone (8) de stockage en partie haute de la colonne et une zone (9) de dégazage en partie basse de la colonne, une carte à puce passant, lors de l'empilage, de la zone de dégazage à la zone de stockage et le volume de dégazage étant supprimé lors du passage de la zone de dégazage à la zone de stockage.

3. Magasin selon la revendication 2 **caractérisé en ce que** la colonne comporte un rail (11, 12) de guidage d'une carte à puce, les cartes à puce étant entraînées vers le haut par l'intermédiaire des deux courroies (15, 16) formant le moyen d'empilage, dont les faces externes sont crantées chaque cran d'une courroie étant en regard d'un cran de l'autre courroie, montées verticalement sur poulies (17, 18, 19, 20) de part et d'autre de bords opposés d'une carte à puce et de hauteur inférieure à la hauteur de la colonne, l'espacement entre ces deux faces externes étant supérieur à la largeur et ou à la longueur d'une carte à puce et l'espacement entre deux crans en regard est inférieur à la largeur et ou à la longueur d'une carte à puce respectivement, deux crans en regards servant d'une part de support à une première carte à puce dans la zone de dégazage et d'autre part de butée à une deuxième carte à puce en entrée de la zone de dégazage.

4. Magasin selon la revendication 3 **caractérisé en ce que** les courroies sont mises en mouvement par l'intermédiaire d'un piston (27), le piston exerçant une poussée vers le haut, la carte à puce étant ainsi engrenée dans le jeu de courroies.

5. Magasin selon la revendication 4 **caractérisé en ce que** le piston comporte une zone (31) de réception d'une carte à puce, cette zone de réception ayant pour fonction de placer une carte à puce selon un axe de la pile.

6. Magasin selon l'une des revendications 4 ou 5 **caractérisé en ce que** le piston est muni d'un support (32), permettant de porter une carte (3-n+1), dont un encombrement par rapport à deux crans en regard, est inférieur à l'espacement entre ces deux crans en regard.

7. Magasin selon l'une des revendications 3 et 4 à 6 **caractérisé en ce que** deux crans consécutifs d'une même courroie sont séparés d'une distance de dégazage, la distance de dégazage étant par exemple de l'ordre de 5 millimètres.

8. Magasin selon l'une des revendications 1 à 7 **caractérisé en ce qu'**il comporte un moyen de ventilation permettant de créer un courant d'air dans un volume de dégazage.

9. Magasin selon l'une des revendications 3 et 4 à 8 **caractérisé en ce qu'**il comporte un moyen de synchronisation (36) du jeu de courroies.

## Claims

1. Magazine (1) for storage of smart cards (3-1 to 3-n) ***characterised by** the fact that* it includes a means (2) for vertical stacking of smart cards, this means including two vertical notched belts (15, 16), the pitch of the notching defining the height of a degassing volume (4) between two cards (3n, 3n-1) consecutively engaged at the bottom between the belts to produce a stack (7) of cards at the top of the belts.

2. Magazine as described in claim 1, ***characterised by** the fact that* it includes a column (6) acting as a container for the stack of smart cards, the container including a storage zone (8) at the upper part of the column and a degassing zone (9) at the lower part of the column, a smart card passing, on stacking, from the degassing zone to the storage zone and the degassing volume being eliminated on passage from the degassing zone to the storage zone.

3. Magazine as described in claim 2, ***characterised by*** the *fact that* the column includes a rail (11, 12) for guiding a smart card, the smart cards being driven upwardly by means of the two belts (15, 16) forming the stacking means, the outer faces of which are notched each notch of a belt being opposite a notch of the other belt, mounted vertically on pulleys (17, 18, 19, 20) on either side of opposite edges of a smart card and of height less than the height of the column, the spacing between these two outer faces being greater than the width and or the length of a smart card and the spacing between two facing notches is less than the width and or the length of a smart card respectively, two facing notches acting on the one hand as a support for a first smart card in the degassing zone and on the other as a stop for a second smart card at the entry to the degassing zone.

4. Magazine as described in claim 3, ***characterised by** the fact that* the belts are set in motion by means of a piston (27), the piston exercising an upward thrust, the smart card thus being engaged in the set of belts.

5. Magazine as described in claim 4, ***characterised by** the fact that* the piston includes a zone (31) for reception of a smart card, this reception zone having the function of placing a smart card along an axis of the stack.

6. Magazine as described in one of claims 4 or 5, ***characterised by** the fact that* the piston is provided with a support (32), allowing a card (3-n+1) to be carried, occupying a space relative to two facing notches which is less than the spacing between these two facing notches.

7. Magazine as described in one of claims 3 and 4 to 6, ***characterised by** the fact that* two consecutive notches of a same belt are separated by a degassing distance, the degassing distance being for example of the order of 5 millimetres.

8. Magazine as described in one of claims 1 to 7, ***characterised by** the fact that* it includes a ventilation means permitting creation of an air current in a degassing volume.

9. Magazine as described in one of claims 3 and 4 to 8, ***characterised by** the fact that* it includes a means for synchronisation (36) of the set of belts.

## Patentansprüche

1. Magazin (1) zur Lagerung von Chipkarten (3-1 bis 3-n), **dadurch gekennzeichnet, daß** es ein Mittel (2) zum senkrechten Stapeln von Chipkarten aufweist, wobei dieses Mittel zwei senkrechte Zahnriemen (15, 16) besitzt, bei denen der Rastenabstand die Höhe eines Entgasungsvolumens (4) zwischen zwei Karten (3n, 3n-1) definiert, die nacheinander von unten zwischen die Zahnriemen eingeführt werden, um am oberen Ende der Zahnriemen einen Stapel (7) von Karten zu bilden.

2. Magazin nach Anspruch 1, **dadurch gekennzeichnet, daß** es eine Säule (6) aufweist, die als Aufnahmebehälter für den Stapel von Chipkarten dient, wobei der Behälter eine Lagerzone (8) im oberen Bereich der Säule und eine Entgasungszone (9) im unteren Bereich der Säule aufweist, wobei eine Chipkarte beim Stapeln von der Entgasungszone in die Lagerzone übergeht, und das Entgasungsvolumen beim Übergang von der Entgasungszone in die Lagerzone verdrängt wird.

3. Magazin nach Anspruch 2, **dadurch gekennzeichnet, daß** die Säule eine Führungsschiene (11, 12) für eine Chipkarte aufweist, wobei die Chipkarten von den beiden das Stapelmittel bildenden Zahnriemen (15,16) nach oben angetrieben werden, deren Außenflächen mit Rasten versehen sind, wobei jede Raste eines Zahnriemens sich vor einer Raste des anderen Zahnriemens befindet, die senkrecht auf Riemenscheiben (17, 18, 19, 20) zu beiden Seiten von entgegengesetzten Rändern einer Chipkarte angeordnet sind, und deren Höhe geringer ist als die Höhe der Säule, wobei der Abstand zwischen diesen beiden Außenseiten größer ist als die Breite und/oder die Länge einer Chipkarte, und der Abstand zwischen zwei einander gegenüberliegenden Rasten kleiner ist als die Breite und/oder die Länge einer Chipkarte, wobei zwei einander gegenüberliegende Rasten einerseits als Träger für eine erste Chipkarte in der Entgasungszone und andererseits als Anschlag für eine zweite Chipkarte am Eingang der Entgasungszone dienen.

4. Magazin nach Anspruch 3, **dadurch gekennzeichnet, daß** die Zahnriemen mit Hilfe eines Kolbens (27) in Bewegung versetzt werden, wobei der Kolben einen Schub nach oben ausübt, wodurch die Chipkarte in den Satz von Zahnriemen eingeführt wird.

5. Magazin nach Anspruch 4, **dadurch gekennzeichnet, daß** der Kolben eine Zone (31) zur Aufnahme einer Chipkarte aufweist, wobei diese Aufnahmezone die Aufgabe hat, eine Chipkarte gemäß einer Achse des Stapels anzuordnen.

6. Magazin nach einem der Ansprüche 4 oder 5, **dadurch gekennzeichnet, daß** der Kolben mit einem Träger (32) versehen ist, der es ermöglicht, eine Karte (3-n+1) zu tragen, deren Raumbedarf in bezug auf zwei gegenüberliegende Rasten geringer ist als der Abstand zwischen diesen beiden einander gegenüberliegenden Rasten.

7. Magazin nach einem der Ansprüche 3 und 4 bis 6, **dadurch gekennzeichnet, daß** zwei aufeinanderfolgende Rasten des gleichen Zahnriemens durch einen Entgasungsabstand voneinander getrennt sind, der etwa 5 Millimeter beträgt.

8. Magazin nach einem der Ansprüche 1 bis 7, **dadurch gekennzeichnet, daß** es ein Belüftungsmittel aufweist, das es ermöglicht, einen Luftstrom in einem Entgasungsvolumen zu erzeugen.

9. Magazin nach einem der Ansprüche 3 und 4 bis 8, **dadurch gekennzeichnet, daß** es ein Mittel (36) zur Synchronisierung des Satzes von Zahnriemen aufweist.
